# EUROPÄISCHE PATENTSCHRIFT

(11) **EP 0 897 029 B1**
(45) Veröffentlichungstag und Bekanntmachung des Hinweises auf die Patenterteilung: **24.09.2003**
(21) Anmeldenummer: 98115129.3
(22) Anmeldetag: 12.08.1998
(51) Int. Cl.: D04B 21/20

(54) **Abstandsgewirk, daraus hergestellte Koffer- und Laderaumabdeckung für Kraftfahrzeuge, etc.**
Spacer knitwear and luggage or load compartment cover for motor vehicles fabricated therefrom
Tricot entretoise et couvercle de compartiment à baggage ou charge pour des véhicules automobiles produit à partir de celui-ci

(30) Priorität: 13.08.1997 DE 19735060
(43) Veröffentlichungstag der Anmeldung: 17.02.1999
(73) Patentinhaber: GERTEX TEXTIL GMBH, 89547 Gerstetten (DE)
(72) Erfinder: Borek, Klaus, 89547 Gerstetten-Heldenfingen (DE); Alt, Jörg, 89547 Gerstetten (DE)
(74) Vertreter: Patentanwälte Rüger, Barthelt & Abel

(56) Entgegenhaltungen:
- EP-A- 0 529 671
- EP-A- 0 617 152
- DE-A- 2 851 348
- DE-A- 4 317 883
- DE-A- 19 530 928
- DE-U- 9 105 132
- DE-U- 9 110 754
- GB-A- 1 454 375

## Beschreibung

Die Erfindung betrifft eine in Innenräumen von Kraftfahrzeugen zu verwendende Abdeckung, insbesondere für Lade- oder Kofferräume und andere enstprechende Abdeckoder Abschirmeinrichtungen.

Die bekannten Lade- oder Kofferraumabdeckungen von Kraftfahrzeugen, insbesondere PKWs, sind durchweg mehrschichtig insbesondere aus kunststoffbeschichteten Gewebebahnen aufgebaut, die an den Rändern miteinander verschweisst und durch querverlaufende Schweissnähte örtlich so miteinander verbunden sind, dass sich die zur Aufnahme der Spriegel erforderlichen rohrförmigen Taschen ergeben. Bei anderen Konstruktionen sind auf eine durchgehende Bahn Materialstreifen aufgenäht oder aufgeschweisst, die die durchgehenden Taschen begrenzen.

Ausgehend von diesem Stand der Technik ist es Aufgabe der Erfindung, eine Abdeckung zu schaffen, die sich durch eine wesentlich einfachere, kostengünstigere Herstellung, und durch ein geringes Gewicht bei hoher Festigkeit auszeichnet. Zur Lösung dieser Aufgabe weist die erfindungsgemäße Abdeckung die Merkmale des Patentanspruchs 1 auf.

Die neue in Kraftfahrzeugen zu verwendende Abdeckung, insbesondere für Lade- oder Kofferräume, weist ein Abstandsgewirk auf, bei dem in rohr- oder kanalförmige Taschen zwischen den beiden Deck- oder Grundgewirkbahnen Versteifungs- oder Verstärkungselemente, sogenannte Spriegel, eingesetzt sind und zwischen diesen Versteifungsoder Verstärkungselementen polfädenfreie Längsstreifen vorhanden sind, die als Faltkanten wirken.

Sie verzichtet auf eigene zusätzliche Zwischenschichten, wie sie bei bekannten Abdeckungen in Form von Schaumstoffeinlagen etc. erforderlich sind. Durch entsprechende Musterung einer der Deck- oder Grundgewirkbahnen kann der Abdeckung darüberhinaus ein modisches, ästhetisch ansprechendes Aussehen verliehen werden, das mit der Innenraumausstattung des Kraftfahrzeugs zusammenstimmt.

Wird die Abdeckung betriebsmäßig gerafft oder ziehharmonikartig gefaltet, so ergeben die an den entsprechenden Stellen eingearbeiteten, polfädenfreien Längsstreifen einen selbstfaltenden Effekt, weil sich längs dieser Streifen die Abdeckung mit sehr geringem Faltwiderstand faltet, ohne dass jedoch dadurch die Festigkeit der ganzen Abdeckung beeinträchtigt wäre. Schliesslich ergibt der durch die Länge der Polfäden bestimmte Abstand zwischen den beiden Deck- oder Grundgewirkbahnen ein verhältnismäßig großes Luftvolumen zwischen diesen Bahnen und damit eine wirksame Wärmedämmung.

Das Abstandsgewirk der neuen Abdeckung fällt unmittelbar an der Kettenwirkmaschine als kontinuierliche Warenbahn an, die über ihre Länge die in vorbestimmten Abständen verlaufenden, rohr- oder kanalförmigen Taschen enthält. Von dieser Warenbahn brauchen die für den jeweiligen Verwendungszweck erforderlichen Warenstücke lediglich abgelängt und gegebenenfalls wunschgemäß zugeschnitten zu werden. Das jeweilige Warenstück kann an den Rändern, falls erforderlich, verschweisst, verkettelt, abgenäht oder sonstwie eingesäumt werden, doch kann auf diese Massnahmen häufig verzichtet werden, weil die Schnittkanten von Hause aus stabil sind, so dass ein Ausfransen in der Regel nicht zu befürchten ist.

Bei dem eingangs genannten Stand der Technik müssen, wie erwähnt, Taschen in eigenen, verhältnismäßigen aufwendigen Arbeitsgängen in die Abdeckung eingearbeitet werden, indem z.B. zwei zunächst getrennte Bahnen miteinander vernäht, verschweisst oder sonst wie derart miteinander verbunden werden, dass sich die angestrebten, seitlich begrenzten Taschen ergeben. Diese Arbeitsgänge entfallen bei der neuen Abdeckung. Sie bietet außerdem den Vorteil, dass die Deck- oder Grundgewirkbahnen durch entsprechende Wahl der Musterung, des Garnmaterials, etc. mit den jeweiligen Anforderungen entsprechenden Eigenschaften gearbeitet werden können, sich durch eine hohe Festigkeit auszeichnen und gemeinsam mit den die rohr-oder kanalförmigen Taschen begrenzenden Polfäden genügend elastisch sind, um das Einschieben auch verhältnismäßig großer Versteifungs- oder Verstärkungelemente (Spriegel) zu erlauben, ohne dass dadurch die Festigkeit beeinträchtigt würde. Gleichzeitig sind die beiden Deck- oder Grundgewirkbahnen an den solche rohr- oder kanalförmige Taschen begrenzenden Rändern durchgehend fest miteinander verbunden, mit der Folge, dass die rohr - oder kanalförmigen Taschen eine hohe Widerstandsfähigkeit gegen seitliches Aufreissen aufweisen.

Diese Festigkeit kann noch dadurch erhöht werden, dass in dem Abstandsgewirk polfädenfreie Längsstreifen auf wenigstens einer Seite durch jeweils einen streifenförmigen Randbereich begrenzt sind, in dem die Abstandsstruktur verstärkende, zusätzliche Polfäden in die Deck- oder Grundgewirkbahnen eingearbeitet sind. In einer praktischen zweckmäßigen Ausführungsform sind dazu die dem jeweiligen polfädenfreien Längsstreifen fehlenden, überzähligen Polfäden jeweils zur Hälfte in den beiden Randbereichen des Längsstreifen eingearbeitet.

Die Polfäden können mit Vorzug monofile Synthetikfäden sein, wobei die Anordnung dann so getroffen werden kann, dass die beiden Deck- oder Grundgewirkbahnen und die Polfäden sortenrein aus lediglich einem Kunststoffmaterial bestehen. Dies erlaubt ein vollständiges, umweltschonendes Recycling des Abstandsgewirkes.

Die die rohr- oder kanalförmigen Taschen bildenden, polfreien Längsstreifen können, eine unterschiedliche Breite aufweisen. So werden bspw. zur Aufnahme von Verstärkungselementen dienende Taschen der Gestalt dieser Verstärkungselemente entsprechend breit gearbeitet sein, während polfädenfreie Längsstreifen, die zur Erzeugung von Knick- oder Faltkanten dienen, eine Breite von lediglich wenigen Maschen aufweisen müssen. Um der aus dem Abstandsgewirk gearbeiteten Abdeckung unmittelbar ein ansprechendes Äußeres zu geben oder um besondere technische Effekte, bspw. hinsichtlich der Dehnbarkeit, zu erzielen, kann, wie schon erwähnt, wenigstens eine der Deck- oder Grundgewirkbahnen gemustert gearbeitet sein. Im Übrigen kann das Abstandsgewirk entlang wenigstens eines polfädenfreien Länggsstreifens unter Ausbildung einer Randkante beschnitten sein, was den Vorteil mit sich bringt, dass an der Schnittkante keine Polfäden fransenartig hervortreten. Nach dem Beschneiden, können, wie bereits erwähnt, die beiden Gewirkbahnen längs der Randkante miteinander verbunden, etwa verschweisst oder vernäht, etc. werden. Schliesslich ist noch zu erwähnen, dass wenigstens eine der Deck- oder Grundgewirkbahnen auf ihrer Außenseite auch mit einer, gegebenenfalls textilen, Deckschicht beschichtet sein kann.

Die Herstellung doppelflächiger Kettenwirkware, sogenannter Abstandsgewirke, erfolgt auf Kettenwirk- oder Raschelmaschinen in an sich bekannter Weise (vergleiche bspw. "Kettenwirk-Praxis", Heft 4, 1970, Seiten 19 bis 20, Weigricht "Technologie. der Kettenwirkerei", Wien 1949, Seiten 116/117). Aus der DE 43 17 883 A1 ist ein Abstandsgewirk zur Aufpolsterung und als Bezug für Fahrzeugsitze und Innenverkleidungen von Kraftfahrzeugen bekannt, das zwei parallele Gewirkelagen aufweist, die über elastische Abstandsfäden miteinander verbunden sind und bei dem zwischen den Gewirkelagen längliche, zueinander parallele Kammern vorgesehen sind, in denen die begrenzenden Gewirkelagen verbindungsfrei übereinander liegen. In diese Kammern können elastische oder vorgeformte Stäbe eingeschoben sein, um bei Verwendung des Abstandsgewirks als Innenverkleidung von Fahrzeugen, z. B. im Bereiche des Dachhimmels konkave sichtbare Flächen darstellen zu können oder bei der Verwendung als Polster und Bezug von Fahrzeugsitzen die Ausbildung von Rippen und Strukturen in der Polsterung zu erzielen.

Außerdem ist aus der DE 195 30 928 A1 ein Abstandsgewirk mit zwei Warenstücken bekannt, die durch monofile Fäden im Abstand gehalten sind, wobei diese beiden Warenstücke RL-Warenstücke und die monofilen Fäden Polschlingen sind, die auf den einander zugewandten Seiten der Warenstücke vorgesehen und ineinander gedrückt sind. Die mindestens zwei RL-Warenstücke können Abschnitte einer gemeinsamen Warenbahn sein, wobei die monofilen Polschlingen dieser Abschnitte nach Verformen der Warenbahn ineinander gedrückt sind. Dabei können zwischen benachbarten, die monofilen Polschlingen auf der gleichen Seite tragenden Abschnitte der Warenbahn polschlingenfreie Streifen vorgesehen sein, um die Polschlingen durch Umklappen des einen Abschnitts ineinander drücken zu können. Solche aus zwei Warenstücken bestehende Abstandsgewirke sind für Kofferraumabdeckungen von Kraftfahrzeugen etc. nicht ohne Weiteres brauchbar.

In der Zeichnung sind Ausführungsbeispiele des Gegenstandes der Erfindung dargestellt. Es zeigen:
- Figur 1: eine Lade- oder Kofferraumabdeckung gemäß der Erfindung in perspektivischer, schematischer Darstellung, teilweise aufgeschnitten,
- Figur 2: die Lade-oder Kofferraumabdeckung nach Figur 1 in der Draufsicht, in schematischer Darstellung und im Ausschnitt,
- Figur 3: einen Ausschnitt aus der Lade-oder Kofferraumabdeckung nach Figur 2, geschnitten längs der Linie III-III der Figur 2, in einer vergrößerten Seitenansicht und in schematischer Darstellung,
- Figur 4: einen Ausschnitt aus der Lade - oder Kofferraumabdeckung nach Figur 2, geschnitten längs der Linie IV-IV der Figur 2, im abgebogenen Zustand und in einer schematischen Seitenansicht,
- Figur 5 und 6: die Legung von zwei Abbstandsgewirken gemäß der Erfindung, insbesondere zur Verwendung für die Kofferraumabdeckung nach Figur 2.

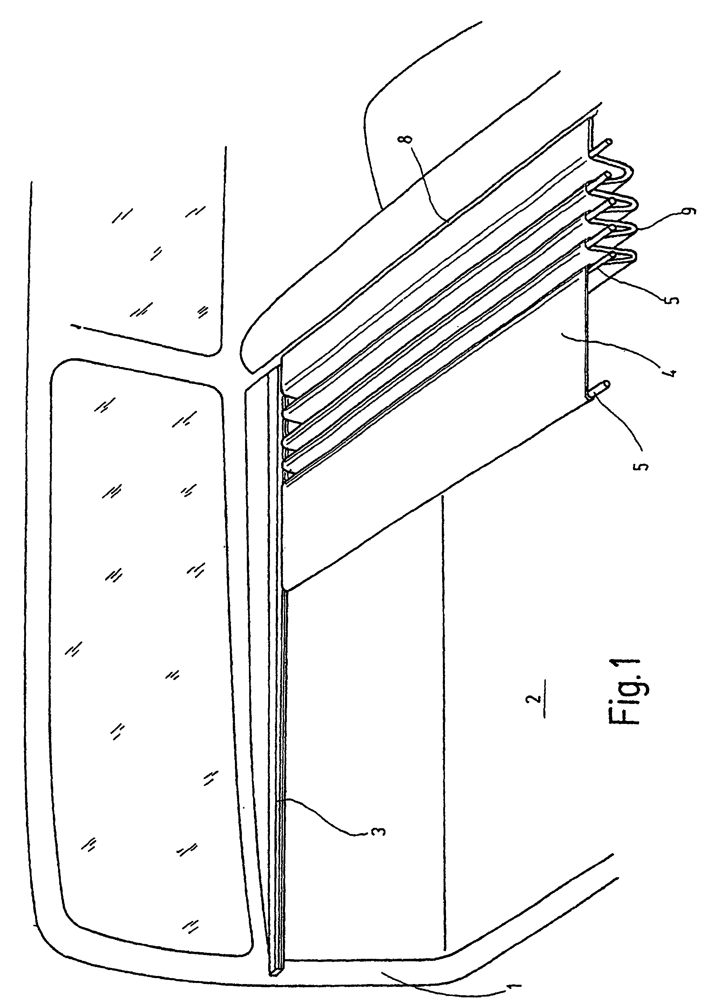

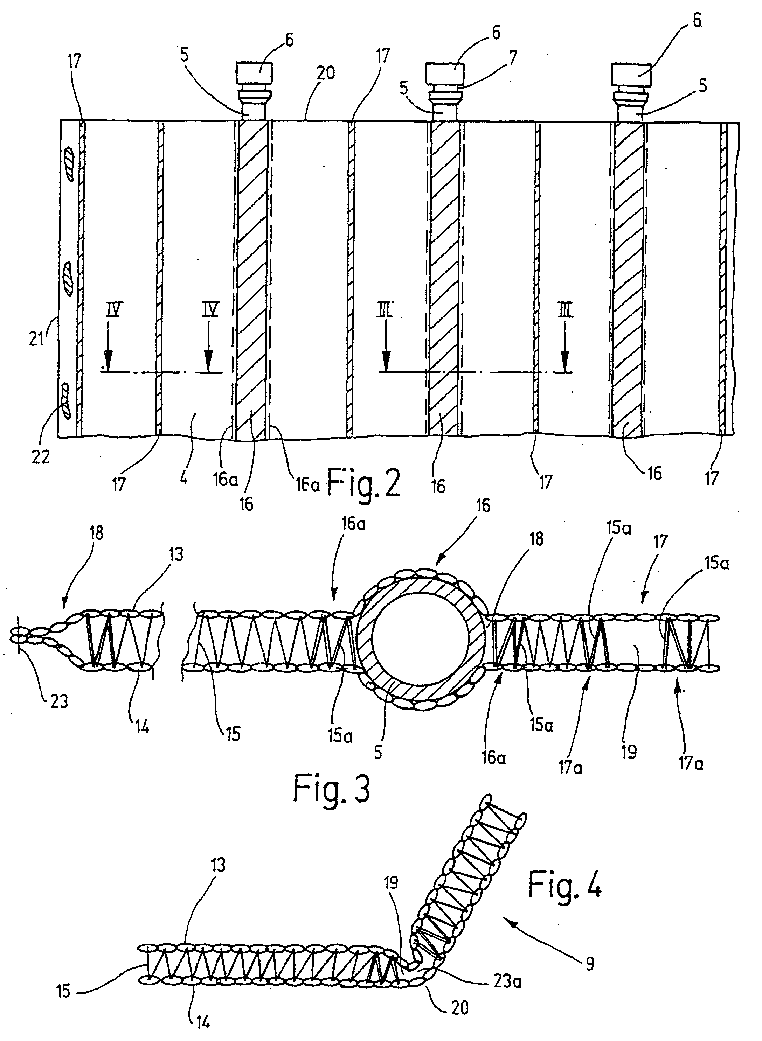

In Figur 1 ist eine Einrichtung zum Abdecken des Lade- oder Kofferraumes eines bei 1 angedeuteten PKWs dargestellt. Diese Einrichtung weist zwei an der Innenwand der Karosserie oberhalb des Lade- oder Kofferraums 2 einander gegenüberliegend angeordnete, horizontale Führungsschienen 3 auf, von denen in Figur 1 eine dargestellt ist und die in einer gemeinsamen, horizontalen Ebene liegen. Zwischen den beiden Führungsschienen 3 ist eine biegsame, textile Abdeckung 4 angeordnet, die auf einer Anzahl von rohrförmigen Versteifungselementen 5, sogenannten Spriegeln abgestützt ist, von denen jedes in der aus Figur 2 ersichtlichen Weise endseitig ein Führungsstück 6 trägt, mit dem das Versteifungselement 5 in der zugeordneten, im Querschnitt im Wesentlichen C-förmigen Führungsschiene 3 längsverschieblich geführt ist. Die Führungsstücke 6 sind zu diesem Zwecke mit ringsumlaufenden Führungsnuten 7 ausgebildet, in die Führungsschenkel der Führungsschienen 3 eingreifen. Die Abdeckung 4 ist an einer Randkante bei 8 ortsfest verriegelt. Sie kann an ihrer gegenüberliegenden Randkante ergriffen und längs der Führungsschienen 3 über den Lade- oder Kofferraum 2 gezogen werden bis sie straff gespannt den Lade- oder Kofferraum 2 abdeckt. Beim Öffnen werden die Versteifungselemente 5 zusammengeschoben, wobei sich zwischen benachbarten Versteifungselementen 5 die Abdeckung 4 ziehharmonikaartig in Falten legt, wie dies in Figur 1 bei 9 angedeutet ist.

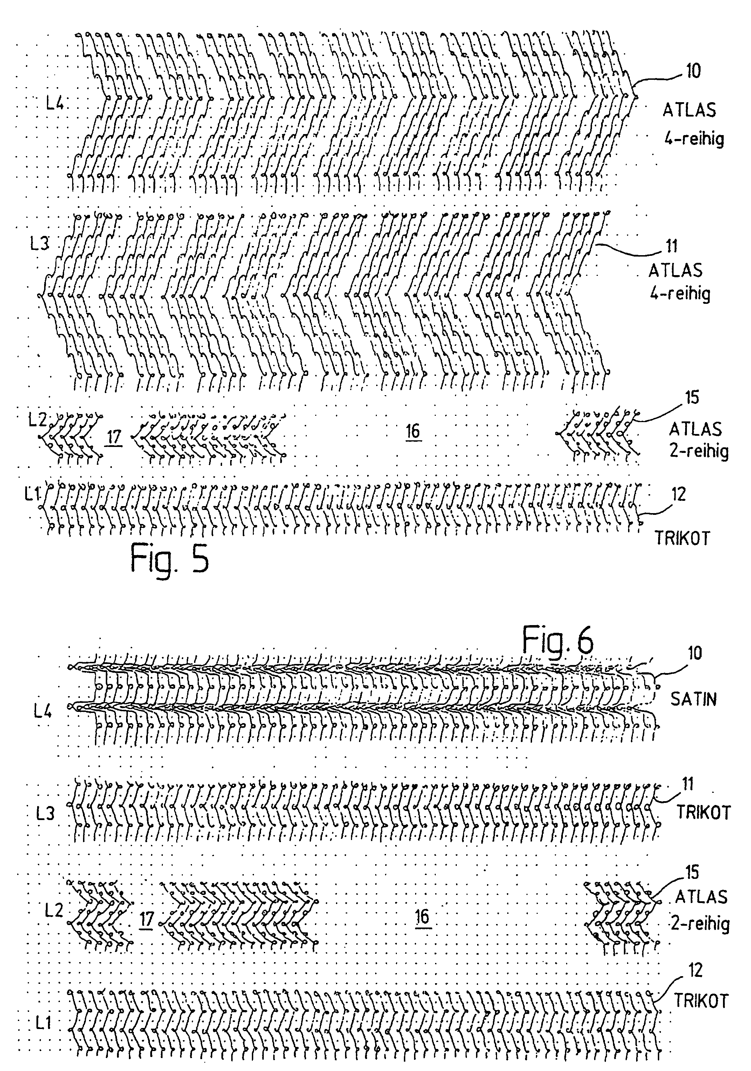

Die Abdeckung 4 besteht aus einem Abstandsgewirk, das auf einer Kettenwirk- oder Raschelmaschine hergestellt ist und dessen grundsätzlicher Aufbau schematisch in Figur 3 dargestellt ist. Das Abstandsgewirk weist zwei aus Grundfäden 10, 11, 12 (Figur 5,6) gearbeitete Deck- oder Grundgewirkbahnen 13, 14 auf, zwischen denen eine Abstandsstruktur vorgesehen ist, die aus beiden Deck- oder Grundgewirkbahnen 13, 14 miteinander verbindenden, im Wesentlichen aufrecht stehenden Polfäden 15 besteht, welche in den beiden Deck- oder Grundgewirkbahnen 13, 14 zusammen mit den Grundfäden 10, 11, 12 vermascht sind.

Das die Abdeckung 4 bildende Abstandsgewirk ist mit polfädenfreien Längsstreifen 16, 17 (Figur 5) gearbeitet, in denen über die Breite der Abdeckung 4 durchgehend offene, rohr- oder kanalförmige Taschen 18, 19 ausgebildet sind, die eine unterschiedliche Breite aufweisen. Bei dem dargestellten Ausführungsbeispiel beträgt die Breite der polfädenfreien Längsstreifen 16 und damit der Taschen 18, 28 Maschen der Deck- oder Grundgewirkbahnen 13, 14, während in den schmäleren polfädenfreien Längsstreifen 17 die Polfäden 15 in jeweils 4 Maschen der Deck- oder Grundgewirkbahnen 13, 14 fehlen. In die breiteren rohr- oder kanalförmigen Taschen 18 sind die rohrförmigen Versteifungselemente oder Spriegel 5 eingeschoben, die in der aus Figur 3 zu entnehmenden Weise zwischen den Deck- oder Grundgewirkbahnen 13, 14 aufgenommen sind, welche satt an der Umfangsfläche der Versteifungselemente 5 anliegen.

Wegen der fehlenden Polfäden 15 ist im Bereiche der freibleibenden, schmäleren rohr- oder kanalförmigen Taschen 19 die Formstabilität des Abstandsgewirkes verringert, was durch die gegenseitige Beweglichkeit der Maschen der Deck- oder Grundgewirkbahnen 13, 14 in dem Bereich der Längsstreifen 17 unterstützt wird. Beim Zusammenschieben der Abdeckung 4 in der aus Figur 1 zu entnehmenden Weise, bilden sich deshalb im Bereiche dieser schmalen Taschen 19 automatisch Falt-oder Knickkanten 20 (Figur 4) aus, mit der Folge, dass.sich,die Abdeckung 4 ,beim Zurückschieben Ihres freien Randes von selbst in die in Figur 1 veranschaulichte ziehharmonikaförmige Gestalt faltet. Das Zustandekommen dieses Selbstfaltungseffekts ist aus Figur 4 ohne Weiteres verständlich. Da die beiden Deck- oder Grundgewirkbahnen 13, 14 über die Falten 9 unverändert durchgehen, ist die Festigkeit der Abdeckung 4 durch die Falt- oder Knickkanten 20 in keiner Weise beeinträchtigt.

Der gegenseitige Abstand der polfädenfreien Längsstreifen 16, 17 und damit der rohr- oder kanalförmigen Taschen 18, 19 ist durch die konstruktiven Gegebenheiten der jeweiligen Abdeckeinrichtung bedingt. Er kann durch entsprechende Einstellung der Kettenwirk- oder Raschelmaschine an sich beliebig gewählt werden. Die Abdeckung 4 wird einfach in Gestalt eines Warenstückes abgelängt, dessen Länge der Breite der Abdeckung 4 entspricht.

Die polfädenfreien Längsstreifen 16, 17 werden durch Fadeneinzug erzeugt, derart, dass die normalerweise in diesen Längsstreifen 16,17 liegenden Polfäden 15, jeweils zur Hälfte, beidseitig der polfädenfreien Längsstreifen 16, 17 als zusätzliche Polfäden 15a (Figur 3) in die beiden Deck- oder Grundgewirkbahnen 13, 14 eingearbeitet werden. Dadurch ergeben sich streifenförmige Randbereiche 16a, 17a der polfädenfreien Längsstreifen 16, 17. Diese in Fig. 3 nur schematisch angedeuteten Randbereiche 16a, 17a bewirken eine Verstärkung des Abstandsgewirkes an den beiden einander gegenüberliegenden Seiten der jeweiligen Taschen 18, 19, so dass diese gegen unerwünschtes Aufweiten oder gegen Aufreißen zusätzlich gesichert sind. Bei dem dargestellten Ausführungsbeispiel ist in jedem der Randbereiche 16a über 14 Maschen die Abstandsstruktur der Polfäden 15a doppelfädig gearbeitet, während die schmäleren Randstreifen 17a über jeweils zwei Maschen mit doppelten Polfäden 15a gearbeitet sind.

An den den Führungsschienen 3 zugewandten Rändern 20 der Abdeckung 5 ist das Abstandsgewirk einfach durchgeschnitten. Erforderlichenfalls kann es auch abgenäht oder abgekettelt oder mit einer randseitigen Schweissnaht ausgebildet sein. An einem parallel zu den rohr- oder kanalförmigen Taschen 18, 19 verlaufenden Rand 21 ist auf eine der Deck- oder Grundgewirkbahnen 13, 14 der Abdeckung 4 ein Klettband aufgebracht, das zur Befestigung dieses Randes an einem Fahrzeugsitz oder einer Querstange der Karosserie dient und das in Figur 2 bei 22 angedeutet ist.

Das die Abdeckung 4 bildende Abstandsgewirk kann auch längs eines der polfädenfreien Längsstreifen 16, 17 unter Ausbildung einer Randkante beschnitten sein, die parallel zu der Randkante 21 der Figur 2 verläuft. Wie in Figur 3 links schematisch angedeutet, können die beiden Deck- oder Grundgewirkbahnen 13, 14 längs eines solchen polfädenfreien Längsstreifens 17, 18 auch miteinander verbunden, bspw. miteinander vernäht oder verschweisst sein. Die Verbindungsnaht ist in Figur 3 bei 23 angedeutet. Dies gilt nicht nur für den Fall, dass die Naht 23 gleichzeitig einen Rand des Abstandsgewirkstückes bildet oder diesem benachbart ist. Es sind auch Fälle denkbar, in denen eine solche Naht 23a im Bereiche einer in dem Abstandsgewirk ausgebildeten, rohr-oder kanalförmigen Tasche 19 vorgesehen ist, derart, dass die beiden Deck- oder Grundgewirkbahnen 13 hier linien- oder streifenförmig miteinander verbunden sind. Der Zweck dieser Massnahme kann bspw. darin bestehen, die Faltbarkeit des Abstandsgewirkes zu erhöhen, d.h. die Falt- oder Knickkante 20 nach Figur 4 noch wirksamer zu gestalten.

Die Polfäden 15 sind vorzugsweise monofile Synthetikfäden, die die erforderliche Stauchfestigkeit aufweisen. Im Übrigen können die beiden Deck- oder Grundgewirkbahnen 13, 14 und die Polfäden 15 sortenrein aus lediglich einem Kunststoffmaterial, bspw. Polyester bestehen, so dass die ganze Abdeckung sortenrein recyclebar ist. Abhängig von dem Verwendungszweck ist es auch ohne Weiteres möglich, eine oder beide der Deck- oder Grundgewirkbahnen 13, 14 . gemustert zu arbeiten.

In den Figuren 5, 6 ist die Legung eines für die Abdeckung 4 verwendbaren Abstandsgewirkes in zwei Ausführungsformen veranschaulicht, die jedoch nicht beschränkend verstanden werden dürfen. Die Figuren bezeichnen mit L1 bis L4 jeweils eine Legeschiene der hier verwendeten 4-schienigen Kettenwirkmaschine.

Das Legungsbild nach Figur 6 zeigt eine Deck- oder Grundgewirkbahn 13 in Trikotlegung (L1). Die Polfäden 15 sind in zweireihiger Atlaslegung (L2) angeordnet, während die andere Deck- oder Grundgewirkbahn 14 in Trikot- und Satinlegung (L3, L4) gearbeitet ist.

Das andere Legungsbild nach Figur 5 veranschaulicht die eine Deck- oder Grundgewirkbahn 13 ebenfalls in Trikotlegung (L1). Die Polfäden 15 sind in zweireihiger Atlaslegung (L2) zur Abstandsbildung angeordnet. Die andere Deck- oder Grundgewirkbahn 14 ist als vierreihiger Atlas (L3 und L4) gearbeitet, der ein Lochfilet bildet.

## Patentansprüche

1. Abdeckung, insbesondere für Lade- oder Kofferräume von Kraftfahrzeugen, bestehend aus einem Abstandsgewirk mit zwei aus Grundfäden (10, 11, 12) gearbeiteten Deckoder Grundgewirkbahnen (13, 14), zwischen denen eine Abstandsstruktur vorgesehen ist, die aus die beiden Gewirkbahnen miteinander verbindenden, aufrecht stehenden Polfäden (15) besteht, welche in den beiden Gewirkbahnen zusammen mit den Grundfäden vermascht sind, wobei
- das Abstandsgewirk mit polfädenfreien Längsstreifen (16, 17) gearbeitet ist, in denen durchgehend offene, rohr- oder kanalförmige Taschen (18, 19) zwischen den beiden Gewirkbahnen ausgebildet sind,
- in rohr- oder kanalförmigen Tasche (18) längliche Versteifungs- oder Verstärkungselemente (5) eingefügt sind, **dadurch gekennzeichnet, daß**
das Abstandsgewirk zwischen den die Versteifungsoder Verstärkungselemente (5) enthaltenden Taschen (18) angeordnete Falt- oder Knickkanten(29) aufweist, die durch pölfädenfreie Längsstreifen (17) gebildet sind.

2. Abdeckung nach Anspruch 1, **dadurch gekennzeichnet, dass** polfädenfreie Längsstreifen (16, 17) auf wenigstens einer Seite durch einen streifenförmigen Randbereich (16a, 17a) begrenzt sind, in dem die Abstandstruktur verstärkende, zusätzliche Polfäden (15a) in die Gewirkbahnen (13, 14) eingearbeitet sind.

3. Abdeckung nach Anspruch 2, **dadurch gekennzeichnet, dass** die in dem.jeweiligen polfädenfreien Längsstreifen (16, 17) fehlenden, überzähligen Polfäden (15a) jeweils zur Hälfte in den beiden Randbereichen (16a, 17a) des Längsstreifens (16, 17) eingearbeitet sind.

4. Abdeckung nach einem der vorhergehenden Ansprüche, **dadurch gekennzeichnet, dass** die Polfäden (15) des Abstandsgewirkes monofile Synthetikfäden sind.

5. Abdeckung nach Anspruch 4, **dadurch gekennzeichnet, dass** die beiden Gewirkbahnen (13, 14) und die Polfäden (15) sortenrein aus lediglich einem-Kunststoffmaterial bestehen.

6. Abdeckung nach einem der vorhergehenden Ansprüche, **dadurch gekennzeichnet, dass** die polfädenfreien Längsstreifen (16, 17) des Abstandsgewirkes eine unterschiedliche Breite aufweisen.

7. Abdeckung nach einem der vorhergehenden Ansprüche, **dadurch gekennzeichnet, dass** wenigstens eine der Gewirkbahnen (13, 14) des Abstandgewirkes gemustert gearbeitet ist.

8. Abdeckung nach einem der vorhergehenden Ansprüche, **dadurch gekennzeichnet, dass** das Abstandsgewirk entlang wenigstens eines polfädenfreien Längsstreifens (16, 17) unter Ausbildung einer Randkante beschnitten ist.

9. Abdeckung nach Anspruch 8, **dadurch gekennzeichnet, dass** die beiden Gewirkbahnen (13, 14) des Abstandsgewirkes längs der Randkante (bei 23) miteinander verbunden sind.

10. Abdeckung nach einem der vorhergehenden Ansprüche, dass die beiden Gewirkbahnen (13, 14) des Abstandsgewirkes längs eines polfädenfreien Längsstreifens (16, 17) miteinander verbunden sind;

11. Abdeckung nach einem der vorhergehenden Ansprüche, dass wenigstens eine Gewirkbahn (13, 14) des Abstandgewirkes auf ihrer Außenseite mit einer gegebenenfalls textilen Deckschicht beschichtet ist.

## Claims

1. Cover, in particular for loading or luggage areas of motor vehicles, comprising a knitted spacer fabric with two knitted cover or base fabric lengths (13, 14) worked from foundation threads (10, 11, 12), a spacer structure being provided between said fabric lengths, which is composed of upright pile threads (15), which join the two knitted fabric lengths together and are knitted together with the foundation threads in the two knitted fabric lengths, wherein
- the knitted spacer fabric is worked with pile thread-free lengthwise stripes (16, 17), in which continuously open, tubular or channel-shaped pockets (18, 19) are formed between the two knitted fabric lengths,
- longitudinal stiffening or reinforcing elements (5) are inserted into tubular or channel-shaped pockets (18),
**characterised in that** the knitted spacer fabric has fold or crease edges (29) arranged between the pockets (18) containing the stiffening or reinforcing elements (5) and formed by pile thread-free lengthwise stripes (17).

2. Cover according to Claim 1, **characterised in that** the pile thread-free lengthwise stripes (16, 17) are defined on at least one side by a strip-like edge region (16a, 17a), in which additional pile threads (15a) reinforcing the spacer structure are worked into the knitted fabric lengths (13, 14).

3. Cover according to Claim 2, **characterised in that** respectively half of the excess pile threads (15a) absent from the respective pile thread-free lengthwise stripes (16, 17) are worked into the two edge regions (16a,17a) of the lengthwise stripe (16, 17).

4. Cover according to one of the preceding claims, **characterised in that** the pile threads (15) of the knitted spacer fabric are monofilament synthetic threads.

5. Cover according to Claim 4, **characterised in that** the two knitted fabric lengths (13, 14) and the pile threads (15) are made purely from only one synthetic material.

6. Cover according to one of the preceding claims, **characterised in that** the pile thread-free lengthwise stripes (16, 17) of the knitted spacer fabric have a different width.

7. Cover according to one of the preceding claims, **characterised in that** at least one of the knitted fabric lengths (13, 14) of the knitted spacer fabric is worked with a pattern.

8. Cover according to one of the preceding claims, **characterised in that** the knitted spacer fabric is trimmed along at least one pile thread-free lengthwise stripe (16, 17) to form a selvedge.

9. Cover according to Claim 8, **characterised in that** the two knitted fabric lengths (13, 14) of the knitted spacer fabric are joined together along the selvedge (at 23).

10. Cover according to one of the preceding claims, **characterised in that** the two knitted fabric lengths (13, 14) of the knitted spacer fabric are joined together along a pile thread-free lengthwise stripe (16, 17).

11. Cover according to one of the preceding claims, **characterised in that** at least one knitted fabric length (13, 14) of the knitted spacer fabric is coated on its outside with a covering layer possibly made of textile fabric.

## Revendications

1. Rideau cache-bagages, en particulier pour espaces de chargement ou coffres à bagages de véhicules automobiles, composé d'un tricot tridimensionnel avec deux bandes de tricot de couverture ou de base (13, 14) formées partir de fils de base (10, 11, 12), entre lesquelles est disposée une structure tridimensionnelle formée de fils polaires (15) dressés, qui relient entre elles les deux bandes de tricot et sont tricotés avec les fils de base dans les deux bandes,
• le tricot tridimensionnel étant réalisé avec des bandes longitudinales (16, 17) sans fils polaires, dans lesquelles des poches (18, 19) en forme de tube ou de canal, ouvertes d'un bout à l'autre, sont formées entre les deux bandes de tricot,
• des éléments de rigidification ou de renfort (5) allongés étant insérés dans les poches (18) en forme de tube ou de canal
**caractérisé en ce que**
le tricot tridimensionnel, entre les poches (18) contenant les éléments de rigidification ou de renfort (5), présente des lignes de pliage (29) qui sont formées par des bandes longitudinales (17) ne comportant pas de fils polaires.

2. Rideau cache-bagages selon la revendication 1, **caractérisé en ce que** des bandes longitudinales (16, 17) sans fils polaires, sur au moins un côté, sont limitées par une zone de bord (16a, 17a) en forme de bande, dans laquelle les fils polaires (15a) supplémentaires de rigidification de la structure tridimensionnelle sont intégrés dans les bandes de tricot (13, 14).

3. Rideau cache-bagages selon la revendication 2, **caractérisé en ce que** les fils polaires (15a) en surplus, absents dans la bande longitudinale (16, 17) ne comportant pas de fils polaires concernée, sont intégrés pour moitié chaque fois dans les deux zones de bord (16a, 17a) de la bande longitudinale (16, 17).

4. Rideau cache-bagages selon une des revendications précédentes, **caractérisé en ce que** les fils polaires (15) du tricot tridimensionnel sont des fils synthétiques monofilaments.

5. Rideau cache-bagages selon la revendication 4, **caractérisé en ce que** les deux bandes de tricot (13, 14) et les fils polaires (15) sont intégralement formés d'une seule matière synthétique.

6. Rideau cache-bagages selon une des revendications précédentes, **caractérisé en ce que** les bandes longitudinales (16, 17) ne comportant pas de fils polaires du tissu tridimensionnel ont des longueurs différentes.

7. Rideau cache-bagages selon une des revendications précédentes, **caractérisé en ce qu'**au moins une des bandes de tricot (13, 14) est réalisée avec un motif.

8. Rideau cache-bagages selon une des revendications précédentes, **caractérisé en ce que** le tissu tridimensionnel est coupé le long d'au moins une des bandes longitudinales (16, 17) ne comportant pas de fils polaires et forme une arête vive.

9. Rideau cache-bagages selon la revendication 81 **caractérisé en ce que** les deux bandes de tricot (13, 14) du tricot tridimensionnel sont liées l'une à l'autre le long de l'arête vive (en 23).

10. Rideau cache-bagages selon une des revendications précédentes, **caractérisé en ce que** les deux bandes de tricot (13, 14) du tricot tridimensionnel sont liées l'une l'autre le long d'une bande longitudinale (16, 17) ne comportant pas de fils polaires

11. Rideau cache-bagages selon une des revendications précédentes, **caractérisé en ce qu'**au moins une bande de tricot (13, 14) du tricot tridimensionnel sur son côté extérieur est recouverte d'une couche de couverture, le cas échéant textile.
